# EUROPÄISCHE PATENTSCHRIFT

(11) **EP 2 594 818 B1**
(45) Veröffentlichungstag und Bekanntmachung des Hinweises auf die Patenterteilung: **05.03.2014**
(21) Anmeldenummer: 11189170.1
(22) Anmeldetag: 15.11.2011
(51) Int. Cl.: F16D 1/092, H02K 7/00

(54) **Produktionsmaschine mit über Kegelflächen reibschlüssig verbundenem elektrischem Antrieb**
Production machine with an electrical drive with friction-type connection using taper surfaces
Machine de production dotée d'un entraînement électrique relié par friction à l'aide de surfaces coniques

(43) Veröffentlichungstag der Anmeldung: 22.05.2013
(73) Patentinhaber: Siemens Aktiengesellschaft, 80333 München (DE)
(72) Erfinder: Damm, Jochen, 97640 Oberstreu (DE); Huber, Michael, 91058 Erlangen (DE)

(56) Entgegenhaltungen:
- EP-A1- 2 383 468
- DE-C- 593 773
- US-A- 4 337 406
- US-A- 4 811 616
- US-A- 5 818 136
- US-A1- 2004 189 126

## Beschreibung

Die vorliegende Erfindung betrifft eine Maschine, insbesondere eine Produktionsmaschine,
- wobei die Maschine einen Maschinenkorpus und eine im Maschinenkorpus um eine Rotationsachse drehbar gelagerte Maschinenwelle aufweist,
- wobei die Maschinenwelle ein Wellenende aufweist, das mit einer Rotorwelle eines Rotors eines elektrischen Antriebs reibschlüssig verbunden ist,
- wobei ein Stator des elektrischen Antriebs über eine Drehmomentstütze drehfest am Maschinenkorpus abgestützt ist.

Eine derartige Maschine ist beispielsweise aus dem Fachaufsatz "Spannsysteme für Torquemotoren - Torquemotoren mit zylindrischen Wellen oder Hohlwellen verbinden" von Ernst Fritzemeier, VDI-Berichte Nr. 2004, 2007, Seiten 487 bis 501, bekannt.

Das Verbinden eines elektrischen Hohlwellenantriebs mit einer Maschinenwelle einer Produktionsmaschine erfordert einen hohen Aufwand beim Bewerkstelligen der Verbindung. Insbesondere müssen Fluchtungsfehler zwischen der Maschinenwelle und der Rotorwelle des elektrischen Antriebs vermieden werden. Bereits dies erfordert relativ aufwändige und komplizierte und in der Folge auch teure Spanneinrichtungen. Weiterhin soll eine möglichst hohe Steifigkeit erzielt werden, um gute Regeleigenschaften zu ermöglichen. Auch soll Passungsrost vermieden werden.

Im Stand der Technik erfolgt das Verspannen üblicherweise mittels eines Spannrings, der radial zwischen der als Vollwelle ausgebildeten Maschinenwelle und der als Hohlwelle ausgebildeten Rotorwelle angeordnet ist und mittels dessen die Maschinenwelle und die Rotorwelle radial gegeneinander verspannt werden. Zusätzlich ist - in hinreichendem axialem Abstand vom Spannring - ein Stützring vorhanden, mittels dessen die Maschinenwelle relativ zur Rotorwelle radial zentriert wird. Die Ausrichtung der Rotationsachse des Rotors relativ zur Rotationsachse der Mäschinenwelle ist äußerst schwierig und zeitintensiv. Die Momentenübertragung erfolgt ausschließlich über den Spannring, d. h. eine relativ kleine Fläche. Dies erfordert hohe Spannkräfte, was wiederum den Passungsrost fördert. Weiterhin ist eine hohe lokale Belastung der Rotorwelle die Folge, weshalb die Rotorwelle zumindest in dem Bereich, in dem sich der Spannring befindet, eine relativ große Materialstärke aufweisen muss. Dennoch ist in der Regel nur eine mäßige Torsionssteifigkeit erreichbar.

Aus der US 4 811 616 A ist eine Produktionsmaschine der eingangs genannten Art bekannt, welche zusätzlich die Merkmale realisiert,
- dass das Wellenende der Maschinenwelle und die Rotorwelle des elektrischen Antriebs aufeinander abgestimmte Wellenkegelflächen aufweisen und
- dass das Wellenende der Maschinenwelle und die Rotorwelle des elektrischen Antriebs mittels einer Spanneinrichtung in Axialrichtung gegeneinander verspannt sind, so dass über die aufeinander abgestimmten Wellenkegelflächen die reibschlüssige Verbindung zwischen dem Wellenende der Maschinenwelle und der Rotorwelle bewirkt ist.

Der Rotor des elektrischen Antriebs muss dadurch nur im Bereich seiner Wellenkegelfläche eine hohe Steifigkeit aufweisen. Der Innendurchmesser der Rotorwelle verringert sich mit zunehmendem axialem Abstand von der Maschinenwelle. Die relativ große Kontaktfläche (= Fläche des entsprechenden Kegelmantels) ermöglicht trotz niedriger Flächenpressung eine hohe Torsionssteifigkeit. Darüber hinaus ergibt sich durch die Ausgestaltung als Kegelfläche automatisch die Zentrierung und Ausrichtung der Rotationsachse der Rotorwelle relativ zur Rotationsachse der Maschinenwelle. Eine Taumelbewegung tritt nicht mehr auf. Dies verringert insbesondere die Belastung der Lager von Maschinenwelle und Rotorwelle und erhöht damit die Standzeit der Maschine. Aufgrund der verringerten Flächenpressung ist die Gefahr von Passungsrost reduziert.

Die Aufgabe der vorliegenden Erfindung besteht darin, eine Maschine der zuletzt genannten Art auszugestalten.

Die Aufgabe wird durch eine Maschine mit den Merkmalen des Anspruchs 1 gelöst. Vorteilhafte Ausgestaltungen der erfindungsgemäßen Maschine sind Gegenstand der abhängigen Ansprüche 2 und 3.

Erfindungsgemäß ist vorgesehen, eine Maschine der zultezt genannten Art dadurch auszugestalten,
- dass auf der Maschinenwelle eine tangential um die Rotationsachse umlaufende Klemmeinrichtung angeordnet ist,
- dass die Klemmeinrichtung einen inneren Klemmring und einen äußeren Klemmring aufweist,
- dass der innere Klemmring direkt an der Maschinenwelle anliegt und mit der Maschinenwelle drehfest verbunden ist,
- dass der äußere Klemmring über Befestigungsschrauben mit dem Rotor verschraubt ist und
- dass der innere Klemmring und der äußere Klemmring aufeinander abgestimmte Klemmringkegelflächen aufweisen, mittels derer die Klemmringe miteinander verspannbar sind.

Für die weitere Ausgestaltung der Spanneinrichtung bieten sich verschiedene Möglichkeiten an. So kann die Rotorwelle beispielsweise als Hohlwelle ausgebildet sein.

Das Zusammenfügen von Rotorwelle und Maschinenwelle ist besonders einfach, wenn die Maschinenwelle an ihrem Wellenende und die Rotorwelle miteinander zusammenwirkende zylindrische Zentriereinrichtungen aufweisen, mittels derer die Rotorwelle beim Ansetzen der Rotorwelle an die Maschinenwelle relativ zur Maschinenwelle zentriert wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1 bis 3: je eine Ausgestaltung einer Maschine und
- FIG 4: eine Ansicht der Maschine von FIG 3 längs einer Linie IV-IV in FIG 3.

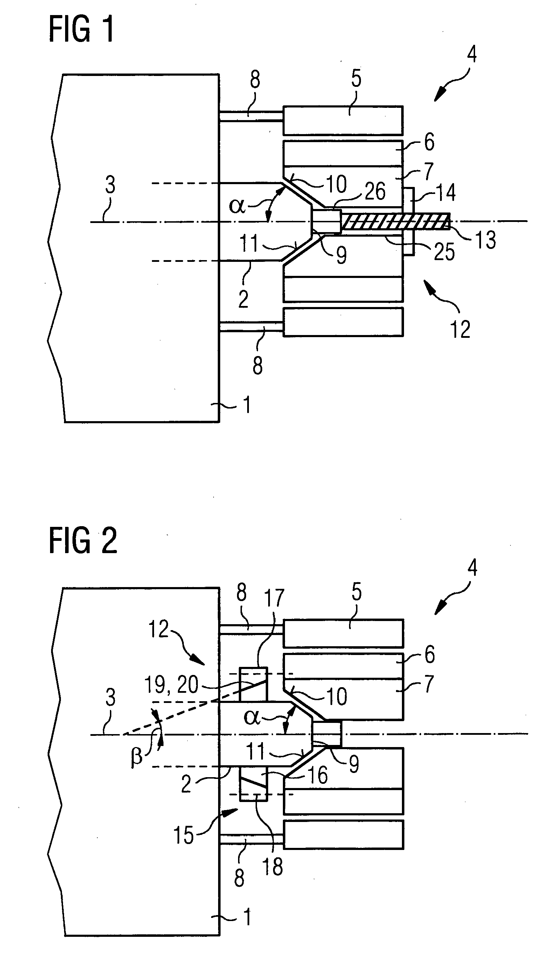

Gemäß den FIG 1 bis 3 weist eine Maschine einen Maschinenkorpus 1 (Grundkörper 1) und eine Maschinenwelle 2 auf. Die Maschine kann beliebiger Natur sein. Insbesondere kann es sich um eine Produktionsmaschine handeln, beispielsweise eine Druckmaschine, eine Presse, eine Querschneidemaschine oder eine Folienziehanlage. Die Maschinenwelle 2 ist im Maschinenkorpus 1 um eine Rotationsachse 3 drehbar gelagert.

Soweit nachfolgend - und auch vorstehend - die Begriffe "axial", "radial" und "tangential" verwendet werden bzw. wurden, sind sie stets auf die Rotationsachse 3 bezogen. "Axial" ist eine Richtung parallel zur Rotationsachse 3. "Radial" ist eine Richtung orthogonal zur Rotationsachse 3 auf die Rotationsachse 3 zu bzw. von ihr weg. "Tangential" ist eine Richtung orthogonal zur Axialrichtung und orthogonal zur Radialrichtung, d. h. in konstantem radialem Abstand kreisförmig um die Rotationsachse 3 herum.

Die Maschine weist weiterhin einen elektrischen Antrieb 4 auf. Der elektrische Antrieb 4 umfasst insbesondere einen Stator 5 und einen Rotor 6. Der Rotor 6 umfasst seinerseits eine Rotorwelle 7.

Der Stator 5 des elektrischen Antriebs 4 ist über eine Drehmomentstütze 8 drehfest am Maschinenkorpus 1 abgestützt. Die Rotorwelle 7 des Rotors 6 ist mit einem Wellenende 9 der Maschinenwelle 2 reibschlüssig verbunden. Die vorliegende Erfindung betrifft insbesondere die Ausgestaltung und Realisierung dieser reibschlüssigen Verbindung.

Zur Realisierung der reibschlüssigen Verbindung von Rotorwelle 7 und Wellenende 9 weisen die Rotorwelle 7 und das Wellenende 9 Kegelflächen 10, 11 auf, nachfolgend als Wellenkegelflächen 10, 11 bezeichnet. Die Wellenkegelflächen 10, 11 sind aufeinander abgestimmt. Insbesondere stimmen ihre Kegelwinkel α überein.

Weiterhin ist eine Spanneinrichtung 12 vorhanden, mittels derer das Wellenende 9 und die Rotorwelle 7 in Axialrichtung gegeneinander verspannt sind. Auf mögliche Ausgestaltungen der Spanneinrichtung 12 wird später in Verbindung mit den FIG 1, 2 und 3 einzeln eingegangen werden. Unabhängig von der konkreten Ausgestaltung der Spanneinrichtung 12 werden die Wellenkegelflächen 10, 11 jedoch durch die Spanneinrichtung 12 aneinander gepresst. Dadurch wird über die Wellenkegelflächen 10, 11 die reibschlüssige Verbindung zwischen dem Wellenende 9 und der Rotorwelle 7 bewirkt.

Gemäß konkret der Ausgestaltung von FIG 1, die als solche nicht Gegenstand der vorliegenden Erfindung ist, ist die Rotorwelle 7 als Hohlwelle ausgebildet. Weiterhin weist die Spanneinrichtung 12 bei dieser Ausgestaltung eine Gewindestange 13 auf. Die Gewindestange 13 ist am Wellenende 9 angeordnet und erstreckt sich in Axialrichtung. Auf die Gewindestange 13 ist ein Spannelement 14 aufgeschraubt. Das Spannelement 14 wirkt auf die Rotorwelle 7. Insbesondere drückt das Spannelement 14 die Rotorwelle 7 in Axialrichtung an das Wellenende 9 der Maschinenwelle 2 an.

Bei komplexen Ausgestaltungen des Spannelements 14 ist es möglich, dass die Gewindestange 13 noch innerhalb der Rotorwelle 7 endet. Vorzugsweise jedoch ragt entsprechend der Darstellung von FIG 1 die Gewindestange 13 am von der Maschinenwelle 2 abgewandten Ende des elektrischen Antriebs 4 über die Rotorwelle 7 hinaus. In diesem Fall kann das Spannelement 14 als einfache Schraubenmutter ausgebildet sein. Gegebenenfalls kann zwischen der Schraubenmutter 14 und der Rotorwelle 7 eine Beilegscheibe oder dergleichen angeordnet sein.

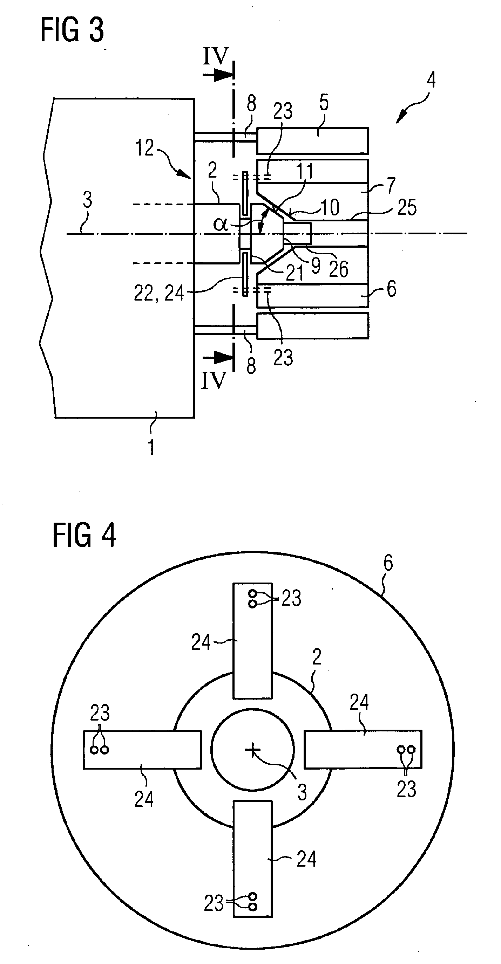

Bei der Ausgestaltung gemäß FIG 1 ist die Ausbildung der Rotorwelle 7 als Hohlwelle zwingend. Bei den Ausgestaltungen der FIG 2 und 3 ist die entsprechende Ausgestaltung der Rotorwelle 7 zwar ebenfalls gegeben. Im Gegensatz zur Ausgestaltung von FIG 1 ist dies jedoch nicht zwingend, sondern nur optional.

Gemäß FIG 2 ist auf der Maschinenwelle 2 eine Klemmeinrichtung 15 angeordnet. Die Klemmeinrichtung 15 läuft tangential um die Rotationsachse 3 um. Sie weist einen inneren Klemmring 16 und einen äußeren Klemmring 17 auf. Der innere Klemmring 16 liegt direkt an der Maschinenwelle 2 an. Er ist mit der Maschinenwelle 2 drehfest verbunden. Beispielsweise kann er auf die Maschinenwelle 2 aufgeschrumpft sein oder mit der Maschinenwelle 2 verschweißt sein. Der äußere Klemmring 17 ist über Befestigungsschrauben 18 mit dem Rotor 6 verschraubt. Die Klemmringe 16, 17 weisen - analog zu Wellenende 9 und Rotorwelle 7 - Kegelflächen 19, 20 auf, nachfolgend als Klemmringkegelflächen 19, 20 bezeichnet. Die Klemmringkegelflächen 19, 20 sind aufeinander abgestimmt. Insbesondere weisen sie den gleichen Kegelwinkel β auf. Mittels der Klemmringkegelflächen 19, 20 sind die Klemmringe 16, 17 gegeneinander verspannbar und ist gleichzeitig das Wellenende 9 an die Rotorwelle 7 andrückbar.

Bei der Ausgestaltung gemäß FIG 3, die als solche ebenfalls nicht Gegenstand der vorliegenden Erfindung ist, weist die Maschinenwelle 2 eine Stufe 21 auf. Die Stufe 21 kann beispielsweise entsprechend der Darstellung von FIG 3 Teil eines Einstichs sein. Die Stufe 21 ist von einer Mitnehmereinrichtung 22 hintergriffen. Die Mitnehmereinrichtung 22 ist tangential um die Rotationsachse 3 herum angeordnet. Sie ist mit dem Rotor 6 über Befestigungsschrauben 23 verschraubt. Aufgrund der Verschraubung wird das Wellenende 9 der Maschinenwelle 2 mittels der Mitnehmerelemente 22 in Axialrichtung an die Rotorwelle 7 angedrückt.

Bei entsprechender Ausgestaltung der Stufe 21 ist es möglich, dass die Mitnehmereinrichtung 22 als tangential um die Rotationsachse 3 umlaufender Ring ausgebildet ist. Vorzugsweise besteht die Mitnehmereinrichtung 22 jedoch gemäß der Darstellung von FIG 4 aus einer Mehrzahl von Klemmplättchen 24, die über die Befestigungsschrauben 23 einzeln mit dem Rotor 6 verschraubt sind. Die dargestellte Anzahl an Klemmplättchen 24 (4 Klemmplättchen 24) ist jedoch rein beispielhaft.

Die oben genannten Ausgestaltungen der FIG 1 bis 4 können dadurch noch weiter verbessert werden, dass die Maschinenwelle 2 an ihrem Wellenende 9 und die Rotorwelle 7 miteinander zusammenwirkende zylindrische Zentriereinrichtungen 25, 26 aufweisen, mittels derer die Rotorwelle 7 beim Ansetzen der Rotorwelle 7 an die Maschinenwelle 2 - also noch vor dem Kontakt der Wellenkegelflächen 10, 11 miteinander - relativ zur Maschinenwelle 2 zentriert wird.

Die vorliegende Erfindung weist viele Vorteile auf. Insbesondere wird über die bereits genannten Wirkungen hinaus eine schnelle und einfache Montierbarkeit des elektrischen Antriebs 4 am Maschinenkorpus 1 erreicht. Weiterhin werden für das Verbinden nur standardmäßig verfügbare Elemente wie beispielsweise im Falle der Ausgestaltung von FIG 1 eine Gewindestange 13 und eine Mutter 14 benötigt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

## Patentansprüche

1. Maschine, insbesondere Produktionsmaschine,
- wobei die Maschine einen Maschinenkorpus (1) und eine im Maschinenkorpus (1) um eine Rotationsachse (3) drehbar gelagerte Maschinenwelle (2) aufweist,
- wobei die Maschinenwelle (2) ein Wellenende (9) aufweist, das mit einer Rotorwelle (7) eines Rotors (6) eines elektrischen Antriebs (4) reibschlüssig verbunden ist,
- wobei ein Stator (5) des elektrischen Antriebs (4) über eine Drehmomentstütze (8) drehfest am Maschinenkorpus (1) abgestützt ist,
- wobei das Wellenende (9) der Maschinenwelle (2) und die Rotorwelle (7) des elektrischen Antriebs (4) aufeinander abgestimmte Wellenkegelflächen (10, 11) aufweisen,
- wobei das Wellenende (9) der Maschinenwelle (2) und die Rotorwelle (7) des elektrischen Antriebs (4) mittels einer Spanneinrichtung (12) in Axialrichtung gegeneinander verspannt sind, so dass über die aufeinander abgestimmten Wellenkegelflächen (10, 11) die reibschlüssige Verbindung zwischen dem Wellenende (9) der Maschinenwelle (2) und der Rotorwelle (7) bewirkt ist,
**dadurch gekennzeichnet,**
- **dass** auf der Maschinenwelle (2) eine tangential um die Rotationsachse (3) umlaufende Klemmeinrichtung (15) angeordnet ist,
- **dass** die Klemmeinrichtung (15) einen inneren Klemmring (16) und einen äußeren Klemmring (17) aufweist,
- **dass** der innere Klemmring (16) direkt an der Maschinenwelle (2) anliegt und mit der Maschinenwelle (2) drehfest verbunden ist,
- **dass** der äußere Klemmring (17) über Befestigungsschrauben (18) mit dem Rotor (6) verschraubt ist und
- **dass** der innere Klemmring (16) und der äußere Klemmring (17) aufeinander abgestimmte Klemmringkegelflächen (19,20) aufweisen, mittels derer die Klemmringe (16,17) miteinander verspannbar sind.

2. Maschine nach Anspruch 1,
**dadurch gekennzeichnet,**
**dass** die Rotorwelle (7) als Hohlwelle ausgebildet ist.

3. Maschine nach Anspruch 1 oder 2,
**dadurch gekennzeichnet,**
**dass** die Maschinenwelle (2) an ihrem Wellenende (9) und die Rotorwelle (7) miteinander zusammenwirkende zylindrische Zentriereinrichtungen (25, 26) aufweisen, mittels derer die Rotorwelle (7) beim Ansetzen der Rotorwelle (7) an die Maschinenwelle (2) relativ zur Maschinenwelle (2) zentriert wird.

## Claims

1. Machine, in particular production machine,
- wherein the machine has a machine body (1) and a machine shaft (2) rotationally mounted in the machine body (1) about an axis of rotation (3),
- wherein the machine shaft (2) has a shaft end (9) which is connected in a friction-fit manner to a rotor shaft (7) of a rotor (6) of an electric drive (4),
- wherein a stator (5) of the electric drive (4) is anti-rotationally supported on the machine body (1) via a torque support (8),
- wherein the shaft end (9) of the machine shaft (2) and the rotor shaft (7) of the electric drive (4) have complementary tapered shaft surfaces (10, 11),
- wherein the shaft end (9) of the machine shaft (2) and the rotor shaft (7) of the electric drive (4) are braced against one another in the axial direction via a tensioning device (12) so as to bring about the friction-fit connection between the shaft end (9) of the machine shaft (2) and the rotor shaft (7) via the complementary tapered shaft surfaces (10, 11),
**characterized in that**
- a clamping device (15) rotating tangentially about the axis of rotation (3) is disposed on the machine shaft (2),
- the clamping device (15) has an inner clamping ring (16) and an outer clamping ring (17),
- the inner clamping ring (16) is in direct contact with the machine shaft (2) and is anti-rotationally connected to the machine shaft (2),
- the outer clamping ring (17) is bolted to the rotor (6) via fixing bolts (18) and
- the inner clamping ring (16) and the outer clamping ring (17) have complementary tapered clamping ring surfaces (19,20) by means of which the clamping rings (16,17) can be interlocked.

2. Machine according to claim 1,
**characterized in that** the rotor shaft (7) is implemented as a hollow shaft.

3. Machine according to claim 1 or 2,
**characterized in that** the machine shaft (2) at its shaft end (9) and the rotor shaft (7) have interacting cylindrical centring devices (25, 26) by means of which the rotor shaft (7) is centred relative to the machine shaft (2) when the rotor shaft (7) is placed onto the machine shaft (2).

## Revendications

1. Machine, notamment machine de production,
- la machine a un corps ( 1 ) de machine et un arbre ( 2 ) de machine monté tournant autour d'un axe ( 3 ) de rotation dans le corps ( 1 ) de machine,
- l'arbre ( 2 ) de machine a un bout ( 9 ), qui est relié à frottement à un arbre ( 7 ) d'un rotor ( 6 ) d'un entraînement ( 4 ) électrique,
- un stator ( 5 ) de l'entraînement ( 4 ) électrique est appuyé, sans pouvoir tourner sur le corps ( 1 ) de la machine, par un appui ( 8 ) de couple de rotation,
- le bout ( 9 ) de l'arbre ( 2 ) de machine et l'arbre ( 7 ) rotorique de l'entraînement ( 4 ) électrique ont des surfaces ( 10, 11 ) d'arbre conique adaptées l'une à l'autre,
- le bout ( 9 ) de l'arbre ( 2 ) de machine et l'arbre ( 7 ) rotorique de l'entraînement ( 4 ) électrique sont bloqués l'un par rapport à l'autre dans la direction axiale au moyen d'un dispositif ( 2 ) de blocage, de manière à provoquer, par les surfaces ( 10, 11 ) coniques d'arbre adaptées l'une à l'autre, la liaison à frottement entre le bout ( 9 ) de l'arbre ( 2 ) de machine et l'arbre ( 7 ) rotorique,
**caractérisée**
- **en ce qu'**il est monté, sur l'arbre ( 2 ) de machine, un dispositif ( 15 ) de serrage faisant le tour tangentiellement de l'axe ( 3 ) de rotation,
- **en ce que** le dispositif ( 15 ) de serrage a un anneau ( 16 ) intérieur de serrage et un anneau ( 17 ) extérieur de serrage,
- **en ce que** l'anneau ( 16 ) intérieur de serrage s'applique directement à l'arbre ( 2 ) de machine et est solidaire en rotation de l'arbre ( 2 ) de machine,
- **en ce que** l'anneau ( 17 ) extérieur de serrage est vissé au rotor ( 6 ) par des vis ( 18 ) de fixation et
- **en ce que** l'anneau ( 16 ) intérieur de serrage et l'anneau ( 17 ) extérieur de serrage ont des surfaces ( 19, 20 ) coniques annulaires de serrage adaptées l'une à l'autre, au moyen desquelles les anneaux ( 16, 17 ) de serrage peuvent être bloqués entre eux.

2. Machine suivant la revendication 1,
**caractérisée**
**en ce que** l'arbre ( 7 ) rotorique est constitué sous la forme d'un arbre creux.

3. Machine suivant la revendication 1 ou 2,
**caractérisée**
**en ce que** l'arbre ( 2 ) de machine à son bout ( 9 ) d'arbre et l'arbre ( 7 ) rotorique ont des dispositifs ( 25, 26 ) cylindriques de centrage coopérant entre eux et au moyen desquels l'arbre ( 7 ) rotorique est, lorsqu'on met l'arbre ( 7 ) rotorique sur l'arbre ( 2 ) de machine, centré par rapport à l'arbre ( 2 ) de machine.
